# DEMANDE DE BREVET EUROPEEN

(11) **EP 4 159 033 A1**
(43) Date de publication de la demande: **05.04.2023**
(21) Numéro de dépôt: 22199372.8
(22) Date de dépôt: 03.10.2022
(51) Int. Cl.: A01K 61/54, B65D 33/16, A01K 61/55, B65D 85/50

(54) **POCHE OSTRÉICOLE ET ENSEMBLE CORRESPONDANT**

(30) Priorité: 04.10.2021 FR 2110472
(71) Demandeur: CNG Emballages Industriels, 49280 Mazières-en-Mauges (FR)
(72) Inventeur: GRANGER, Thierry, 49280 Mazières-en-Mauges (FR)
(74) Mandataire: Lavoix

(57) **Abrégé**

Cette poché ostréicole (4) comporte un corps de base (8) muni de mailles (22) et comprenant une première extrémité (12), une seconde extrémité (14) et deux parois (20), la première extrémité formant un bord (16) de corps de base et une ouverture (18) du corps de base, un élément de retenue (10) fixé au corps de base et adapté pour retenir un élément de fermeture (6) de la poche ostréicole sur le corps de base. L'élément de retenue (10) est en matière plastique surmoulé sur les mailles (22) du corps de base, et l'élément de retenue (10) s'étend à la première extrémité sur une circonférence du corps de base.

## Description

La présente invention concerne une poché ostréicole, du type comportant
un corps de base muni de mailles et comprenant une première extrémité, une seconde extrémité et deux parois, la première extrémité formant un bord de corps de base et une ouverture du corps de base,
un élément de retenue fixé au corps de base et adapté pour retenir un élément de fermeture de la poche ostréicole sur le corps de base.

On connait des poches ostréicoles, par exemple du document FR2858175A1. La poche ostréicole de ce document comporte un corps de base muni de mailles et d'une ouverture. La poche ostréicole comprend deux cordons disposés proche de l'ouverture du corps de base et fixés sur le corps de base par soudage, collage ou insertion dans les mailles.

D'autres poches ostréicoles ou dispositifs de fermeture d'une poche sont connus de FR1256087A, de FR2515481A3, et de FR2607358A1.

L'invention a pour objet de proposer une poche ostréicole ayant une fiabilité importante et permettant d'obtenir un rendement important de l'ostréiculture.

L'invention vise en particulier à proposer une poche ostréicole ayant une résistance mécanique importante, étant donné que les poches ostréicoles sont couramment soumises à des forces importantes, notamment des forces de la marée. De plus, la poche ostréicole selon l'invention vise à être facilement fermable et avoir un comportement de fermeture défini. De plus ou alternativement, la poche ostréicole selon l'invention vise à être économique et facilement recyclable.

A cet effet, l'invention a pour objet une poche ostréicole du type indiqué ci-haut, caractérisée en ce que l'élément de retenue est en matière plastique surmoulé sur les mailles du corps de base,
et en ce que l'élément de retenue s'étend à la première extrémité sur une circonférence du corps de base.

Selon des modes de réalisation particuliers de la poche ostréicole, celle-ci peut comporter l'une ou plusieurs des caractéristiques suivantes :
- l'élément de retenue comprend un corps principal et une saillie de retenue, la saillie de retenue s'étendant sur le corps principal du côté opposé au corps de base de la poche ostréicole ;
- le corps principal comprend une surface intérieure, s'étendant entre les parois du corps de base et une surface extérieure s'étendant en dehors des parois du corps de base, et dans laquelle la surface intérieure comprend des portions planes, les portions planes de la surface intérieure situées à deux emplacements opposées du corps de base de la poche ostréicole étant adaptées pour s'appliquer l'une sur l'autre avec un contact de surface ;

- la saillie de retenue comprend soit une nervure continue faisant le tour du corps de base, soit des portions de nervure s'étendant autour du corps de base et étant espacées les unes des autres ;
- l'élément de retenue fait tout le tour de la circonférence du corps de base :
- l'élément de retenue enrobe complètement le bord du corps de base et forme entièrement une ouverture de la poche ostréicole ;
- le corps de base est en matière thermoplastique et l'élément de retenue est en matière thermoplastique, de préférence ces matières thermoplastiques étant compatibles d'un point de vue recyclage, notamment les deux matières étant du polyéthylène en particulier du polyéthylène haute densité ou polyéthylène basse densité ;
- les mailles sont des mailles en forme de losange formées par deux séries de filaments s'entrecroisant et dans laquelle aucune des deux séries de filaments n'est parallèle à l'ouverture du corps de base ou à un axe central (A-A) de la poche ostréicole ;et
- la poche ostréicole est munie d'au moins un ergot de butée adapté pour s'opposer à un décalage d'un élément de fermeture engagé sur l'élément de retenue, notamment l'élément de retenue et l'ergot de butée étant d'une seule pièce.

L'invention a en outre pour objet un ensemble d'une poche ostréicole et d'un élément de fermeture, caractérisé en ce que la poche ostréicole est une poche ostréicole telle que définie ci-dessus, et en ce que l'élément de fermeture est une barre de fermeture ayant une section creuse et comprenant une fente à travers laquelle l'élément de retenue s'étend à l'état fermée de la poche ostréicole.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue schématique en perspective d'une poche ostréicole selon l'invention;

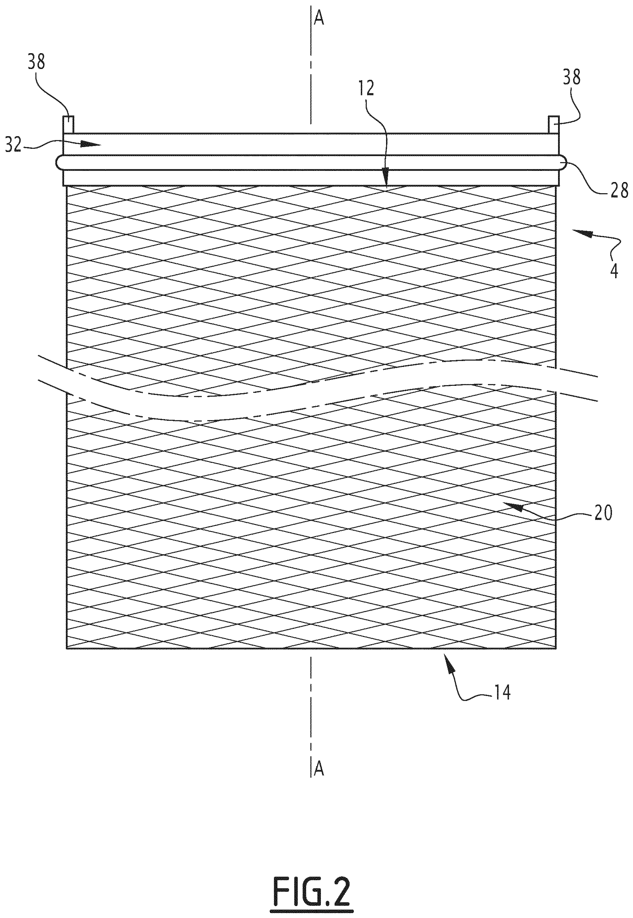

**[****Fig 2****]** La Figure 2 est une vue de côté de la poche ostréicole de la Figure 1 ;
**[****Fig 3****]** La Figure 3 est une vue schématique en coupe de la poche ostréicole des Figures 1 et 2, pris selon la ligne III-III de la Figure 3 ; et
**[****Fig 4****]** La Figure 4 est une vue en coupe, similaire à celle de la Figure 3, d'un ensemble de la poche ostréicole de l'invention des Figures 1 à 3 et d'un élément de fermeture.

La description qui suit contient des caractéristiques techniques de l'invention. Ces caractéristiques techniques, bien que présentées dans un contexte technique et éventuellement en combinaison avec d'autres caractéristiques techniques, peuvent être utilisées à chaque fois individuellement, sans les autres caractéristiques techniques, pour autant que ceci soit techniquement possible.

Dans la description des différents modes de réalisation, les éléments analogues portent les mêmes références. Également, sauf indication contraire, chaque caractéristique décrite en référence à un mode de réalisation de l'invention ou à une variante d'un mode de réalisation est applicable d'une manière isolée ou en toute combinaison techniquement possible aux autres modes de réalisation ou variantes.

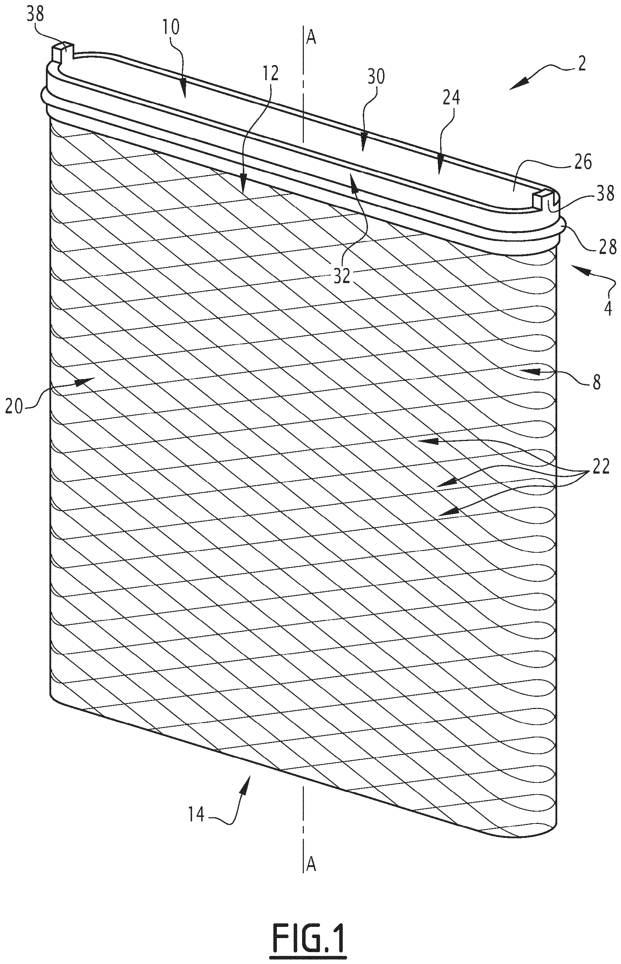

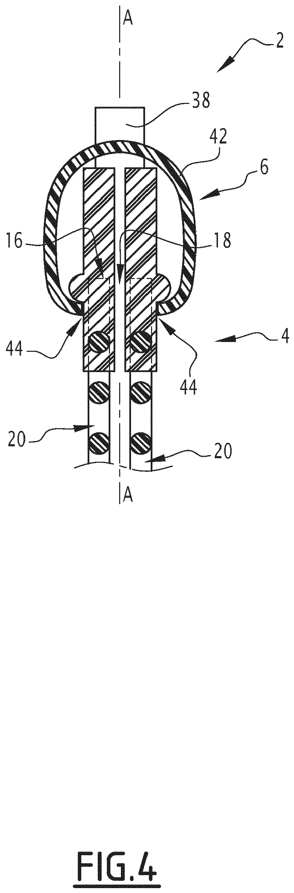

Sur la Figure 1 est représentée un ensemble selon l'invention désigné par la référence générale 2. L'ensemble 2 comprend une poche ostréicole 4 et un élément de fermeture 6 de cette poche ostréicole 4 (Figure 4).

La poché ostréicole 4 comporte un corps de base 8 et un élément de retenue 10 qui est fixé au corps de base 8 et qui est adapté pour retenir un élément de fermeture de la poche ostréicole, tel que l'élément de fermeture 6, sur le corps de base 8.

Le corps de base 8 s'étend le long d'un axe central A-A, qui est également l'axe central de la poche ostréicole 4. Le corps de base 8 comprend une première extrémité 12 axiale, une seconde extrémité 14 axiale.

La première extrémité 12 forme un bord de corps de base 16 et une ouverture du corps de base 18. La seconde extrémité 14 est fermée.

Le corps de base 8 est constitué de deux parois 20 de corps de base opposées, ces parois 20 étant reliées entre-elles le long de la seconde extrémité 14 et le long de deux bords longitudinaux qui s'étendent parallèlement à l'axe central A-A. Les deux bords longitudinaux peuvent être obtenus en extrudant le corps de base 8 d'un seul tenant sous forme d'un extrudé tubulaire ayant une section transversale fermée.

Le corps de base 8 est muni de mailles 22. Ces mailles 22 sont en l'occurrence des mailles en forme de losange formées par deux séries de filaments sensiblement parallèles, les filaments des deux séries s'entrecroisant, et aucune des deux séries de filaments n'étant parallèle à l'ouverture du corps de base ou à l'axe central A-A.

Le corps de base 8 est en matière thermoplastique et notamment en polyéthylène haute densité ou en polyéthylène basse densité.

L'élément de retenue 10 est en matière plastique et est surmoulé sur les mailles 22 du corps de base 8.

L'élément de retenue 10 est en l'occurrence en matière thermoplastique, par exemple en polyéthylène haute densité ou en polyéthylène basse densité. En particulier, les matières thermoplastiques du corps de base 8 et de l'élément de retenue 10 sont de la même famille de matière, donc ces matières sont soit toutes de polyéthylène haute densité soit toutes de polyéthylène basse densité.

De préférence, les matières thermoplastiques du corps de base 8 et de l'élément de retenue 10 sont compatibles d'un point de vue recyclage. Ceci signifie que les deux matières peuvent être fondues ensemble et réutilisées pour fabriquer des objets. En particulier, le corps de base 8 et l'élément de retenue 10 sont en la même matière.

L'élément de retenue 10 s'étend à la première extrémité 12 sur une circonférence du corps de base 8. L'élément de retenue 10 s'étend donc autour de l'axe central A-A et ceci proche du bord de corps de base 16.

L'élément de retenue 10 fait avantageusement tout le tour de la circonférence du corps de base 8.

L'élément de retenue 10 enrobe avantageusement complètement le bord du corps de base 16 et forme donc entièrement une ouverture 24 de la poche ostréicole.

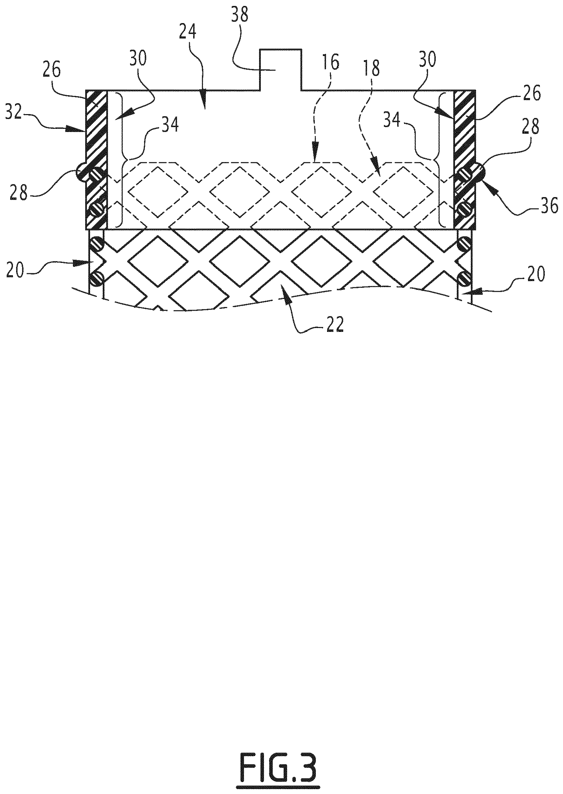

L'élément de retenue 10 comprend un corps principal 26 et une saillie de retenue 28, la saillie de retenue 28 s'étendant sur le corps principal 26 du côté opposé au corps de base de la poche ostréicole. La saillie de retenue 28 est adaptée pour s'opposer à un retrait de l'élément de fermeture 6 dans le sens parallèlement à l'axe central A-A et dirigé en s'éloignant de la seconde extrémité 14 (vers le haut sur les Figures). Vu en coupe parallèlement à l'axe A-A et dans un plan perpendiculairement au plan des parois 20, par exemple dans le plan de la Figure 3, deux portions de la saillie de retenue 28 s'étendent de part et d'autre des deux parois 20.

Le corps principal 26 comprend une surface intérieure 30, s'étendant entre les parois 20 du corps de base et entre un prolongement géométrique des parois 20 du corps de base selon l'axe central A-A. Le corps principal 26 comprend une surface extérieure 32 s'étendant en dehors des parois 20 du corps de base et en dehors un prolongement géométrique des parois 20 du corps de base selon l'axe central A-A.

La surface intérieure 30 comprend des portions planes 34 (Figure 3). Les portions planes 34 de la surface intérieure 30 situées à deux emplacements opposées du corps de base 8 sont adaptées pour s'appliquer l'une sur l'autre avec un contact de surface (Figure 4).

La saillie de retenu 28 fait saillie de la surface extérieure 32. La saillie de retenue 28 comprend une nervure continue 36 faisant le tour du corps de base 8. En variante non représentée la saillie de retenue 28 comprend des portions de nervure s'étendant autour du corps de base 8 et étant espacées circonférentiellement les unes des autres.

La poche ostréicole 4, en l'occurrence l'élément de retenue 10, est munie d'au moins un ergot de butée 38 adapté pour s'opposer à un décalage d'un élément de fermeture, en l'occurrence de l'élément de fermeture 6, engagé sur l'élément de retenue 10. Dans le cas présent, la poche ostréicole 2 comprend deux ergots de butée 38. Chaque ergot de butée 38 s'étend sensiblement parallèlement à l'axe central A-A et du côté de l'élément de retenue 10 opposé au corps de base 8. Ainsi, chaque ergot de butée 38 s'oppose à un décalage de l'élément de fermeture 6 perpendiculairement à l'axe central A-A et à une libération intempestive de l'élément de fermeture 6 de la poche ostréicole.

Avantageusement, chaque ergot de butée 38 est venu de matière avec l'élément de retenue et de la même matière que l'élément de retenue 10. Notamment l'élément de retenue 10 et l'ergot de butée 38 sont d'une seule pièce.

L'élément de fermeture 6 est une barre de fermeture 42 ayant une section creuse et comprenant une fente à travers laquelle l'élément de retenue s'étend à l'état fermée de la poche ostréicole. La barre de fermeture définit deux bords d'appui 44 de part et d'autre de la fente. La barre de fermeture 6 est par exemple en matière thermoplastique, notamment en polyéthylène ou en polychlorure de vinyle. La matière de la barre de fermeture 6 peut être compatible d'un point de vue recyclage avec les matières du corps de base 8 et de l'élément de retenue 10. Ceci signifie que les matières peuvent être fondues ensemble et réutilisées pour fabriquer des objets. En particulier, la barre de fermeture 6 et le corps de base 8, et notamment l'élément de retenue 10, sont en la même matière.

Alternativement, la matière de la barre de fermeture 6 n'est pas compatible d'un point de vue recyclage avec les matières du corps de base 8 et de l'élément de retenue 10.

L'ensemble 2 fonctionne de la manière suivante.

Afin de fermer la poche ostréicole 4, l'élément de fermeture 6 est glissé selon une direction perpendiculairement à l'axe central A-A et sensiblement parallèlement à la surface extérieure 32 sur l'élément de retenue, de telle sorte que l'élément de fermeture s'applique sur les deux surfaces extérieures 32 et surplombe la saillie de retenue 28.

L'élément de fermeture 6 est glissé sur l'élément de retenue jusqu'à ce qu'il se trouve entièrement entre les deux ergots de butée 38, qui s'opposent ensuite à un retrait intempestif de l'élément de fermeture 6.

L'ensemble 2, et plus particulièrement la poche ostréicole 4, peut contenir ou contient au moins une huitre et de préférence une pluralité d'huitres.

La poche ostréicole 4 est économique étant donné qu'elle peut être fermée d'une manière fiable et résistante même aux mouvements induits par la mer. De plus, l'association des mailles disposées en oblique par rapport à l'axe central et l'élément de retenue surmoulé est mécaniquement particulièrement résistante. Les pertes de production d'huitre sont donc très faibles.

La fabrication de la poche est économique, notamment grâce à l'association du corps de base 8 et l'élément de retenue 10 surmoulé.

Le recyclage de la poche est facile et économique grâce au choix des matières des différent éléments constituants de l'ensemble.

## Revendications

1. Poché ostréicole (4), du type comportant
un corps de base (8) muni de mailles (22) et comprenant une première extrémité (12), une seconde extrémité (14) et deux parois (20), la première extrémité formant un bord (16) de corps de base et une ouverture (18) du corps de base,
un élément de retenue (10) fixé au corps de base et adapté pour retenir un élément de fermeture (6) de la poche ostréicole sur le corps de base,
**caractérisée en ce que** l'élément de retenue (10) est en matière plastique surmoulé sur les mailles (22) du corps de base,
et **en ce que** l'élément de retenue (10) s'étend à la première extrémité sur une circonférence du corps de base.

2. Poche ostréicole selon la revendication 1, dans laquelle l'élément de retenue comprend un corps principal (26) et une saillie de retenue (28), la saillie de retenue s'étendant sur le corps principal du côté opposé au corps de base de la poche ostréicole.

3. Poche ostréicole selon la revendication 2, dans laquelle le corps principal comprend une surface intérieure (30), s'étendant entre les parois du corps de base et une surface extérieure (32) s'étendant en dehors des parois du corps de base, et dans laquelle la surface intérieure comprend des portions planes (34), les portions planes de la surface intérieure situées à deux emplacements opposées du corps de base (8) de la poche ostréicole étant adaptées pour s'appliquer l'une sur l'autre avec un contact de surface.

4. Poche ostréicole selon la revendication 2 ou 3, dans laquelle la saillie de retenue (28) comprend soit une nervure continue faisant le tour du corps de base, soit des portions de nervure s'étendant autour du corps de base et étant espacées les unes des autres.

5. Poche ostréicole selon l'une quelconque des revendications 1 à 4, dans laquelle l'élément de retenue (10) fait tout le tour de la circonférence du corps de base.

6. Poche ostréicole selon l'une quelconque des revendications précédentes, dans laquelle l'élément de retenue (10) enrobe complètement le bord du corps de base et forme entièrement une ouverture de la poche ostréicole.

7. Poche ostréicole selon l'une quelconque des revendications précédentes, dans laquelle le corps de base (8) est en matière thermoplastique et l'élément de retenue (10) est en matière thermoplastique, de préférence ces matières thermoplastiques étant compatibles d'un point de vue recyclage, notamment les deux matières étant du polyéthylène en particulier du polyéthylène haute densité ou polyéthylène basse densité.

8. Poche ostréicole selon l'une quelconque des revendications précédentes, dans laquelle les mailles (22) sont des mailles en forme de losange formées par deux séries de filaments s'entrecroisant et dans laquelle aucune des deux séries de filaments n'est parallèle à l'ouverture du corps de base (8) ou à un axe central (A-A) de la poche ostréicole.

9. Poche ostréicole selon l'une quelconque des revendications précédentes, dans laquelle la poche ostréicole (4) est munie d'au moins un ergot de butée (38) adapté pour s'opposer à un décalage d'un élément de fermeture (6) engagé sur l'élément de retenue (10), notamment l'élément de retenue et l'ergot de butée étant d'une seule pièce.

10. Ensemble (2) d'une poche ostréicole (4) et d'un élément de fermeture (6), **caractérisé en ce que** la poche ostréicole est une poche ostréicole selon l'une quelconque des revendications précédentes, et **en ce que** l'élément de fermeture est une barre de fermeture ayant une section creuse et comprenant une fente à travers laquelle l'élément de retenue s'étend à l'état fermée de la poche ostréicole.
